# EUROPEAN PATENT SPECIFICATION

(11) **EP 1 753 123 B1**
(45) Date of publication and mention of the grant of the patent: **30.09.2015**
(21) Application number: 06118638.3
(22) Date of filing: 09.08.2006
(51) Int. Cl.: H02P 6/14

(54) **Methods and apparatus for controlling a motor/generator**
Verfahren und Vorrichtung zur Regelung eines Motorgenerators
Procédé et dispositif pour le contrôle d'un moteur générateur

(30) Priority: 10.08.2005 US 200835; 10.08.2005 US 200834
(43) Date of publication of application: 14.02.2007
(73) Proprietor: Innovatives Power Solutions, LLC, 07724 NJ New Jersey Eatontown (US)
(72) Inventor: Sorkin, Lev, Cranford, NJ 07016 (US)
(74) Representative: Richardt Patentanwälte PartG mbB

(56) References cited:
- DE-A1- 10 062 940
- JP-A- 57 036 593
- TOZUNE A ET AL: "Improvement of torque-speed characteristics of brushless motor by automatic lead angle adjustment" POWER ELECTRONICS AND MOTION CONTROL CONFERENCE, 2004. CONFERENCE PROC EEDINGS. IPEMC 2004. THE 4TH INTERNATIONAL XI'AN, CHINA AUG. 14-16, 2004, PISCATAWAY, NJ, USA,IEEE, vol. 2, 14 August 2004 (2004-08-14), pages 583-587, XP010756687 ISBN: 978-7-5605-1869-5
- HOWE D ET AL: "Sensorless Flux-Weakening Control of Permanent-Magnet Brushless Machines Using Third Harmonic Back EMF" IEEE TRANSACTIONS ON INDUSTRY APPLICATIONS, IEEE SERVICE CENTER, PISCATAWAY, NJ, US, vol. 40, no. 6, 1 November 2004 (2004-11-01), pages 1629-1636, XP011122281 ISSN: 0093-9994
- SUNG-IN PARK ET AL: "An improved current control method for torque improvement of high-speed BLDC motor" APEC 2003. 18TH. ANNUAL IEEE APPLIED POWER ELECTRONICS CONFERENCE AND EXPOSITION. MIAMI BEACH, FL, FEB. 9 - 13, 2003; [ANNUAL APPLIED POWER ELECTRONICS CONFERENCE], NEW YORK, NY : IEEE, US, vol. 1, 9 February 2003 (2003-02-09), pages 294-299, XP010631525 ISBN: 978-0-7803-7768-4
- EL-KHARASHI E A ET AL: "Preliminary Performance Evaluation of Switched Reluctance Motors With Segmental Rotors" IEEE TRANSACTIONS ON ENERGY CONVERSION, IEEE SERVICE CENTER, PISCATAWAY, NJ, US, vol. 19, no. 4, 1 December 2004 (2004-12-01), pages 679-686, XP011122237 ISSN: 0885-8969

## Description

### BACKGROUND OF THE INVENTION

The present invention relates to methods and apparatus for controlling the torque/speed characteristics of a polyphase motor and/or generator.

The published IEEE transaction *Improvement of torque-speed characteristics of brushless motor by automatic lead angle adjustment* discloses a motor drive and control system of an electric motor in which several torque speed characteristics are used to control the motor in dependence of a phase advance angle.

Polyphase machines, such as permanent magnet machines, synchronous machines, and wound rotor machines must be driven such that the windings thereof are energized as a function of the rotor position (and, thus, the rotor flux) in order to obtain driving torque from the machine (for motoring) and/or to obtain opposing torque to from the machine (for generating).

Polyphase machines may be utilized as variable starter-generator machines for an engine, such as a turbine engine. A turbine engine is started by using the polyphase machine to apply torque to a main shaft of the turbine engine, while also providing fuel and other combustion elements to the engine. When the polyphase machine is controlled to produce a suitable torque verses speed characteristic, the turbine engine will start. At or some time after the start event, the polyphase machine may stop applying torque to rotate the turbine engine and the polyphase machine may be controlled in such a way as to generate electricity in response to torque applied to the polyphase machine by the turbine engine.

A desirable torque verses speed characteristic of the polyphase machine acting as a motor to start a turbine engine includes a particular peak torque (or range of torques) substantially at the ignition speed of the turbine engine. When the torque produced by the polyphase machine is too high at the ignition speed, then any number of mechanical linkages of the turbine engine may be overstressed. Conversely, when the peak torque produced by the polyphase machine is too low at the ignition speed, it may take an excessive period of time to reach the start event. An excessive torque or an insufficient torque condition at the ignition speed leads to undesirable results. For example, overstressing mechanical linkages within the turbine engine reduces engine life and decreases the mean time between failures (MTBF). Similarly, excessively long engine start conditions result in increased engine temperature (as it is typical that no air venting in the engine exists during startup), wasted fuel, reduced engine life, decreased MTBF, and false starts.

The conventional approach to designing the polyphase machine and a control system therefore is to optimize the design of the polyphase machine as a generator. This is so because, for example, in aeronautics the polyphase machine is utilized as a generator on the order of 99% of the time and is used as a motor 1% of the time or less. Unfortunately, optimizing the characteristics of the polyphase machine as a generator does not result in an optimum design of the polyphase machine as a motor. The conventional design approach also dictates that the control of the polyphase machine as a motor establishes a fixed lead angle of the electromagnetic field of a stator of the polyphase machine as compared with the electromagnetic field of a rotor of the polyphase machine. Thus, the electrical characteristics of the polyphase machine acting as a motor are carried over and accepted as a necessary result of optimizing the polyphase machine as a generator. However, this leads to undesirable results in connection with controlling the polyphase machine as a motor. For example, a controller and driver of the polyphase machine may need to be relatively oversized as compared with a controller and driver designed for an optimized motor (instead of a generator). Alternatively, the proper peak torque at ignition characteristic might not be achievable in a polyphase machine that has been optimized as a generator. In this situation, the characteristics of the polyphase machine as a generator may need to be sacrificed for achieving a desirable torque verses speed motoring characteristic. Unfortunately, this may cause undesirable results during a generating mode (which is the more likely mode of operation), and increased machine weight.

The conventional control techniques of polyphase machines have also been unsatisfactory in connection with starting the polyphase machine at zero speed. Indeed, many kick start techniques involve complex closed loop circuit configurations that are costly.

Another shortcoming of the conventional control techniques of wound rotor polyphase machines involves the excitation voltage for the rotor. Conventional techniques call for relatively high peak-to-peak AC characteristics with corresponding high peak currents, to drive the rotor winding. This creates relatively high power losses and electromagnetic interference profiles.

Conventional control techniques of polyphase machines have also been unsatisfactory in connection with so-called soft start techniques and so-called soft stop techniques inasmuch as the control technologies have been somewhat complex and costly. Without soft start and soft stop control technologies, the polyphase machine may introduce sharp mechanical impulses during ignition, which reduces the useful life of engine bearings.

The conventional polyphase machine control techniques have also been deficient in the area of battery usage during motoring. In particular, the conventional control techniques call for the same torque/speed control profile for the polyphase machine during startup no matter how many startup attempts are made. Unfortunately, a single startup attempt may utilize 50% or more of the battery capacity in an aircraft. Thus, multiple start attempts could easily deplete the battery. A related problem is that a lower battery voltage requires an increase in the current drawn from the battery to achieve the same torque/speed profile, thereby invoking undesirable circumstances resulting from increased current draw from the battery.

Accordingly, there are needs in the art of new methods and apparatus for controlling a polyphase motor that produce more optimum torque versus speed characteristics from the polyphase machine during motoring and/or generating.

### SUMMARY OF THE INVENTION

In accordance with one or more aspects of the present invention, methods and apparatus provide for: commutating windings of a polyphase machine in response to commutation control signals; producing the commutation control signals such that electromagnetic fields of stator phases of the polyphase machine at least lead electromagnetic fields of rotor phases of the polyphase machine to produce motoring torque; and automatically varying a lead angle measured between the electromagnetic fields of the stator and rotor phases as a function of a rotational speed of the polyphase machine.

The method and apparatus may further provide for: monitoring an angular position of the rotor of the polyphase machine; augmenting the angular position with the lead angle; and producing the commutation control signals as a function thereof to produce motoring torque from the polyphase machine. Additional provisions may include selecting the lead angle as a function of respective ranges of rotational speeds of the polyphase machine. Additional or alternative provisions may include: associating a first lead angle is with a first range of rotational speeds, associating a second lead angle with a second range of rotational speeds, and so on; and selecting and/or changing the lead angle as a function of which range of rotational speeds encompasses the rotational speed of the polyphase machine at a given point in time.

The method and apparatus may further provide for: selecting the lead angle by matching the rotational speed of the polyphase machine at a given point in time with one of a plurality of entries of one or more tables, wherein each entry includes an indication of a respective one of the ranges of rotational speeds and an associated one of the lead angles.

The method and apparatus may further provide for: monitoring an angular position of the rotor of the polyphase machine; and determining and automatically augmenting the angular position with the lead angle, as a function of rotational speed of the polyphase machine, wherein determination of the lead angle enables the polyphase motor to achieve higher torques as a function of rotational speed as compared to fixed lead angle control of the polyphase motor.

Additional or alternative provisions may include: at least one of selecting and computing the lead angle as a function of respective ranges of rotational speeds of the polyphase machine. For example, a first range of rotational speeds may be established by: determining a first torque versus speed envelope for the polyphase machine using a fixed first lead angle; determining a second torque versus speed envelope for the polyphase machine using a fixed second lead angle; and determining a difference between an initial speed and a final speed substantially at which the first and second torque versus speed envelopes intersect. Further ranges of rotational speeds may be established by repeating the determining steps for further fixed lead angles.

Additional or alternative provisions may include varying the lead angle from a negative magnitude to a positive magnitude as a function of time when the rotational speed of the polyphase machine is less than a predetermined value. For example, the predetermined value may be about 10 RPM.

Other advantages, features, and aspects of the invention will be apparent to one skilled in the art in view of the discussion herein taken in conjunction with accompanying drawings.

### BRIEF DESCRIPTION OF THE DRAWINGS

For the purposes of illustrating the invention, there are shown in the drawings forms that are presently preferred, it being understood, however, that the invention is not limited to the precise arrangements and instrumentalities shown.
FIG. 1 is a block diagram illustrating a system for controlling and driving a polyphase motor in accordance with one or more aspects of the present invention;
FIG. 2 is a graphical representation of torque and/or current versus speed characteristics of a polyphase motor;
FIG. 3 is a block diagram illustrating a system for carrying out angular control techniques associated with the system of FIG. 1;
FIG. 4 is a table of angle correction and speed entries that may be utilized by the angular control of FIG. 3;
FIG. 5 is a block diagram illustrating an excitation control system that may be utilized by the system of FIG. 1 in connection with controlling a wound rotor machine;

### DETAILED DESCRIPTION

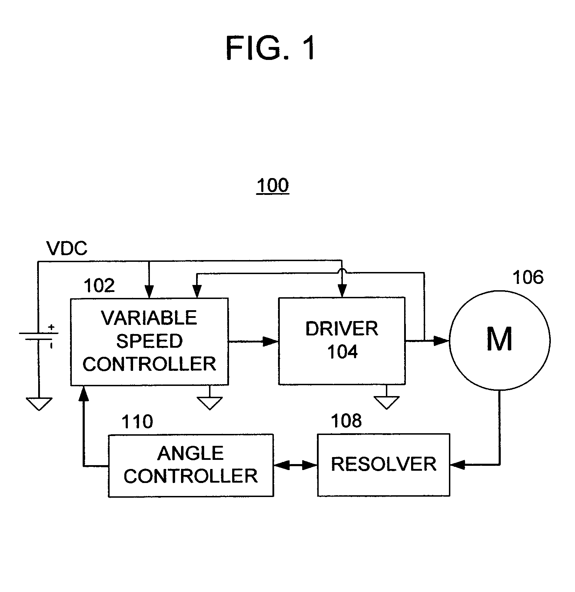

Referring now to the drawings, wherein like numerals indicate like elements, there is shown in FIG. 1 a block diagram illustrating one or more aspects of the present invention. For details of these illustrative embodiments in connection with other types of machines.

The DC source produces a voltage, VDC, with respect to ground that is utilized to provide an operating power (usually of a relatively low voltage and current) to the controller 102 and to provide bus power (usually of relatively high voltage and current) to the driver circuit 104. The invention contemplates that the normal voltage level of the DC source may take on any value. When the voltage level of the DC source is relatively low, such as 24 volts, the DC source may directly provide the operating DC voltage to the controller 102. When the voltage level of the DC source is higher than the maximum operating DC voltage level of the controller 102, however, an additional voltage regulating device (not shown) may be necessary between VDC and the controller 102 to provide the operating DC voltage.

The controller 102 provides commutation control signals to the driver circuit 104 such that the driver circuit 104 can properly energize the stator windings of the machine 106. The windings of the machine 106 are typically in the standard DELTA configuration, but may alternatively be in the WYE configuration. The windings may be any number of phases, such as 3 phase, 6 phase, etc. The driver circuit 104 provides various current paths among the windings, the bus, and ground in order to drive the polyphase machine 106. The controller 102 may monitor the voltages and/or current of the windings of the machine 106 and, in conjunction with angular control signaling from the angle controller 110, produce commutation control signals to the driver circuit 104 such that the windings of the machine 106 achieve desirable voltage, current, and phase characteristics that are synchronized with the rotor position of the polyphase machine 106.

For example, during a motoring mode of operation, the controller 102 is operable to provide commutation control signals to the driver circuit 104 such that the windings of the polyphase machine 106 are commutated in a way that causes the machine 106 to produce motoring torque. This may be useful, for example, in starting a turbine engine. To produce motoring torque, the controller 102 is operable to provide commutation control signals to the driver circuit 104 such that the electromagnetic field(s) of the stator windings lead the electromagnetic field(s) of the rotor windings (or magnets). Alternatively, during a generating mode of operation, the controller 102 is operable to provide commutation control signals to the driver circuit 104 such that the synchronous rectification is provided for the synchronous machine (resulting in the DC generator lower rectification losses). This may be useful, for example, in providing operating power to an electrical system to which the turbine engine is connected. To generate output voltage for an induction machine, the controller 102 is operable to provide commutation control signals to the driver circuit 104 such that the electromagnetic field(s) of the stator windings lag the electromagnetic field(s) of the rotor windings (or magnets).

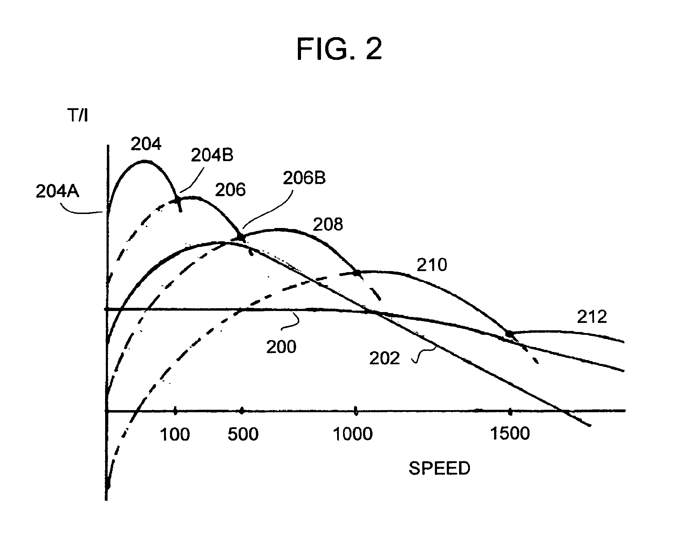

In contrast to the deficiencies of the prior art, various aspects of the present invention contemplate optimizing the characteristics of the polyphase machine 106 for generating and improving the torque/speed characteristics of the polyphase machine 106 during motoring by a novel controlling technique. While the present invention is not intended to be limited by any theory of operation, reference is now made to FIG. 2, which is a graphical representation of torque (or current) verses speed characteristics of the polyphase machine 106 under varying conditions. The torque/speed curve 200 is intended to represent a typical profile for the polyphase machine 106 if it were controlled utilizing a fixed lead angle measured between the electromagnetic fields of the stator and rotor phases of the polyphase machine 106. Such a profile might be useful in operating the polyphase machine 106 as a motor in order to start a turbine engine if the peak torque at the ignition speed was within a desirable range.

In some embodiments, the peak torque at ignition produced by the polyphase machine 106 may be increased, such as to achieve the curve 202, without changing the construction of the polyphase machine 106. To this end, the controller 102 is preferably operable to automatically vary the lead angle as a function of the rotational speed of the polyphase machine 106. As will be discussed in more detail herein below, the controller 102 is preferably operable to increase the lead angle as a function of increasing rotational speed of the polyphase machine 106 in order to increase (or otherwise improve) the torque/speed characteristics of the polyphase machine 106 operating as a motor. This is preferably achieved by monitoring the angular position of the rotor of the polyphase machine 106 by way of the resolver 108 and angle controller 110 such that the angle controller 110 may augment the angular position with the lead angle. This information is preferably input to the controller 102 such that the commutation control signals produced by the controller 102 achieves the desirable lead angle and, therefore, the desirable torque/speed characteristics.

Turning again to FIG. 2, the controller 102 is preferably operable to select the lead angle as a function of respective ranges of rotational speeds of the polyphase machine 106. In other words, a first lead angle is preferably associated with a first range of rotational speeds, a second lead angle is preferably associated with a second range of rotational speeds, and so on. The controller 102 is preferably operable to select (or alternatively calculate) and/or change the lead angle as a function of which range of rotational speeds encompasses the rotational speed of the polyphase machine 106 at a given point in time. This is believed to improve the torque/speed characteristics from the expected characteristic 200 associated with a fixed lead angle to the characteristic 202, which exhibits improved torque/speed characteristics.

The ranges of rotational speeds of the polyphase machine 106 and the associated lead angles are preferably established as follows: A first range of rotational speeds may be established by (i) determining a first torque verses speed envelope for the polyphase machine 106 using a fixed first lead angle; (ii) determining a second torque verses speed envelope for the polyphase machine using a fixed second lead angle; and (iii) determining a difference between an initial speed and a final speed substantially at which the first and second torque verses speed envelopes intersect.

By way of example, the first torque verses speed envelope may be represented by curve 204 in FIG. 2, where curve 204 is established by fixing the lead angle of the polyphase machine 106 at, for example, five degrees. The input current to the polyphase machine 106 is then progressively increased to develop the torque/speed characteristic 204. The increase in input current to the polyphase machine 106 causes the machine to increase its rotational speed and increase its torque over a range of speeds. The increase in current, however, also increases the back electromotive force (BEMF), which eventually causes a reduction in motoring torque with increasing speed. This results in the characteristic of the torque/speed curve 204.

Next, the lead angle of the polyphase machine 106 is fixed at another level, such as 10 degrees, and the polyphase machine 106 is against operated at progressively increased input current. This results in a second torque/speed characteristic 206. As compared with the characteristic 204, the characteristic 206 exhibits higher torques at higher speeds, although the peak torque of characteristic 206 is relatively lower than the peak torque of characteristic 204. This process of characterizing the polyphase machine 106 in terms of fixed lead angles is preferably continued to get additional characteristics 208, 210, 212, etc. Those skilled in the art will appreciate from the description herein that any number of characteristic curves may be employed.

Assuming that the curve 204 is the first torque verses speed envelope and the curve 206 is the second torque verses speed envelope, the first range of rotational speeds may be defined as between an initial point 204A (0 rpm) and a final point 204B (about 100 rpm) at which curves 204 and 206 intersect. Preferably, the lead angle (5 degrees) at which the polyphase machine 106 was fixed in order to obtain the curve 204 is associated with the first range of rotational speeds. A second range of rotational speeds may be established by determining a difference between point 204B (100 rpm) and another point 206B (500 rpm) at which curves 206 and 208 intersect. The lead angle (10 degrees) at which the polyphase machine 106 was fixed in order to establish the curve 206 is preferably associated with the second range of rotational speeds. This process is preferably repeated for each of the ranges of rotational speeds and associated lead angles.

Alternatively, the controller 102 is may be operable to at least one of select and compute the lead angle as a function of the respective ranges of rotational speeds of the polyphase machine 106. This permits the torque/speed characteristic 202 (and associated increased peak torque) as compared with the theoretical torque/speed characteristic 200 associated with a particular fixed lead angle.

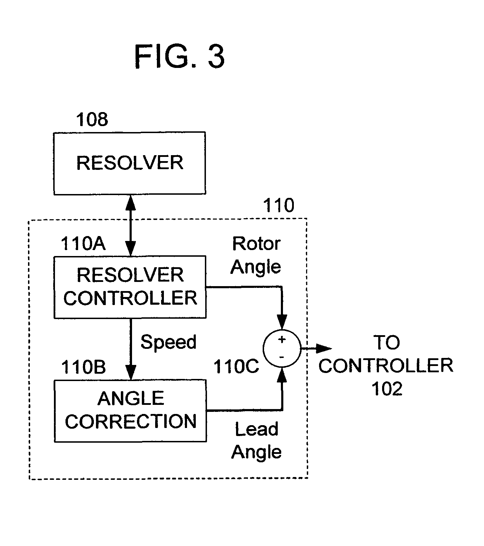

Reference is now made to FIG. 3, which is a block diagram illustrating a more detailed implementation of the angle controller 110 that is suitable for carrying out the above described determination of the lead angle as a function of the rotational speed of the polyphase machine 106. The angle controller 110 preferably includes a resolver controller 110A, and an angle correction circuit 110B, and a summing circuit 110C. The resolver controller 110A is preferably operable to establish a rotational speed and rotor angle of the polyphase machine 106 as a function of time. The speed determination of the resolver controller 110A is preferably input to the angle correction circuit 110B. The angle correction circuit 110B is preferably operable to determine the lead angle associated with the given rotational speed of the polyphase machine 106 in accordance with the aforementioned ranges of rotational speeds. The summing circuit 110C is preferably operable to take a difference of the rotor angle and the lead angle in order to produce a signal input to the controller 102 to achieve desirable commutation control signals for input to the driver 104. Those skilled in the art will appreciate, therefore, that the lead angle is preferably expressed in terms of a negative angle given that the summing circuit 110C includes the polarities shown. Those skilled in the art will appreciate that numerous other implementations may be employed where the lead angle is expressed either as a positive or negative angle.

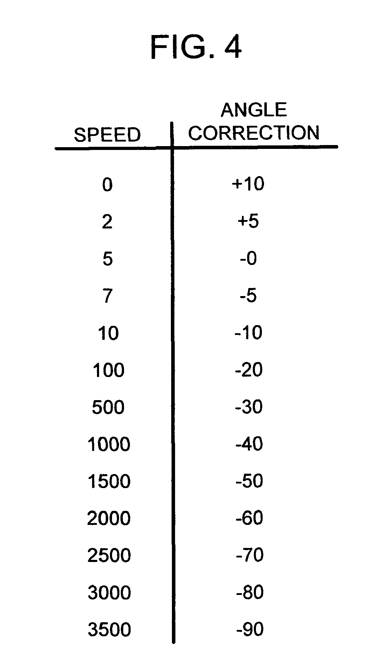

Reference is now made to FIG. 4, which is a table of angle correction (lead angles) and speed entries that may be utilized by the angle correction circuit 110B of FIG. 3. The table includes a plurality of entries, where each entry includes an indication of a respective one of the ranges of rotational speeds and associated one of the lead angles. By way of example, the lead angle of negative 10 is associated with the speed entry of 10, the lead angle of negative 20 is associated with the speed entry of 100, the lead angle of negative 30 is associated with the speed entry of 500, etc. Thus the lead angle of -10 may be associated with any speed between 10 and 99. Similarly, the lead angle of negative 20 may be associated with any rotational speed within 100 and 499, etc.

The angle correction circuit 110B is preferably operable to select the lead angle by matching the rotational speed of the polyphase machine 106 at a given point in time with one of the entries of the table. As shown in FIG. 3, the rotor angle is then augmented with the lead angle (utilizing the adding circuit 110C) to produce a signal for input to the controller 102.

Advantageously, the system 100 employing one or more of the aspects or embodiments discussed hereinabove is capable of controlling the polyphase machine 106 in a manner that achieves desirable torque/speed motoring characteristics (which indeed are an improvement over the typical characteristic) while also permitting the designer to optimize one or more features of the polyphase machine 106 in terms of operating in a generator mode. Further, the ability to control the polyphase machine 106 as described above may lead to advantageous reduction in the maximum current carrying requirements of, for example, the driver circuit 104, thereby leading to improve efficiencies and lower costs for implementation.

The controller 102 may alternatively be operable to vary the lead angle from a negative magnitude to a positive magnitude as a function of time when the rotational speed of the polyphase machine is less than a predetermined value. For example, when the rotational speed of the polyphase machine 106 is below about 10 RPM, the controller 102 may operate to vary the lead angle from about +10 degrees to -10 degrees as a function of time (instead of as a function of speed). This has been found to be advantageous in kick starting the machine 102 at zero or low speeds. With reference to FIG. 4, the kick start function may also implemented by having some entries containing rapidly changing lead angles associated with a small range of rotational speeds e.g., 0 to 10 rpm).

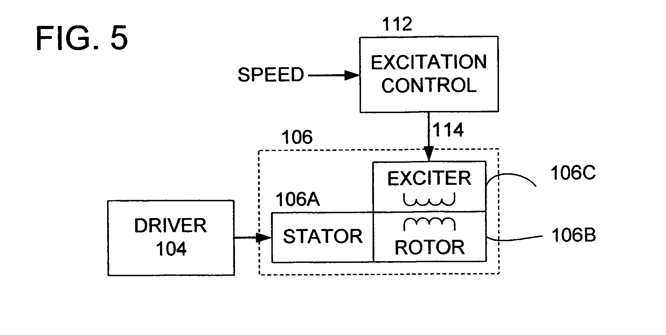

Reference is now made to FIG. 5, which is a block diagram illustrating an excitation control system that may be utilized by the system 100 of FIG. 1 in connection with controlling a wound rotor machine. Those skilled in the art will appreciate that some implementation of the polyphase machine 106 may include a stator 106A, a wound rotor 106B, and an exciter 106C. While the driver circuit 104 is typically used tc commutate the windings of the stator 106A of the polyphase machine 106, a wound rotor machine may also require an excitation voltage in order to induce an electromagnetic field in the rotor 106B in order to achieve motoring and/or generating torque in the polyphase machine 106.

In this regard, the system of FIG. 5 includes an excitation control circuit 112 that is operable to produce an excitation voltage on line 14 in response to at least a rotational speed of the polyphase machine 106. As discussed above, the rotational speed may be obtained by way of the resolver 108 and/or the angle controller 110 (FIG. 1). The excitation voltage 114 is input to the exciter 106C, which by transformer action induces an electromagnetic field in the rotor 106B.

## Claims

1. An apparatus, comprising:
a driver circuit (104) to commutate windings of a polyphase machine (106) in response to commutation control signals; and
a controller (102, 110) configured to produce the commutation control signals such that electromagnetic fields of stator phases of the polyphase machine at least lead electromagnetic fields of rotor phases of the polyphase machine to produce motoring torque,
wherein the controller (110) is configured to automatically vary (110B) a lead angle measured between the electromagnetic fields of the stator and rotor phases as a function of respective ranges of rotational speeds of the polyphase machine (106), a first range of rotational speeds being established by: (i) determining a first torque versus speed envelope for the polyphase machine using a fixed first lead angle; (ii) determining a second torque versus speed envelope for the polyphase machine using a fixed second lead angle; and (iii) determining a difference between an initial speed (204A) and a final speed substantially at which the first and second torque versus speed envelopes intersect (204B) to establish a first range of rotational speeds,
wherein a first lead angle is associated with a first range of rotational speeds, a second lead angle is associated with a second range of rotational speeds, and so on; and
the controller is configured to select and/or change the lead angle as a function of which range of rotational speeds encompasses the rotational speed of the polyphase machine at a given point in time.

2. The apparatus of claim 1, wherein the controller (110) is configured to monitor an angular position of the rotor of the polyphase machine (106), augment the angular position with the lead angle, and produce the commutation control signals as a function thereof to produce motoring torque from the polyphase machine (106).

3. The apparatus of claim 1, further comprising one or more tables having respective entries, where each entry includes an indication of a respective one of the ranges of rotational speeds and an associated one of the lead angles, wherein the controller (110) is configured to select the lead angle by matching the rotational speed of the polyphase machine (106) at a given point in time with one of the entries of the one or more tables.

4. The apparatus of claim 1, wherein the determination of the lead angle enables the polyphase machine (106) to achieve highest torques at any given rotational speed, as a function of rotational speed as compared to fixed lead angle control of the polyphase machine (106).

5. The apparatus of claim 1, wherein the controller (110) is configured to automatically increase the lead angle as a function of increasing rotational speed of the polyphase machine (106).

6. The apparatus of claim 1, wherein the controller (110) is further configured to vary the lead angle from a negative magnitude to a positive magnitude as a function of time when the rotational speed of the polyphase machine is less than a predetermined value.

7. A method, comprising:
at least one of selecting and computing the lead angle as a function of respective ranges of rotational speeds of a polyphase machine (106),
wherein a first range of rotational speeds is established by:
determining a first torque versus speed envelope for the polyphase machine using a fixed first lead angle;
determining a second torque versus speed envelope for the polyphase machine using a fixed second lead angle; and
determining a difference between an initial speed (204A) and a final speed substantially at which the first and second torque versus speed envelopes intersect (204B) to establish a first range of rotational speeds;
commutating windings of a polyphase machine in response to commutation control signals;
producing the commutation control signals such that electromagnetic fields of stator phases of the polyphase machine at least lead electromagnetic fields of rotor phases of the polyphase machine to produce motoring torque; and
automatically varying a lead angle measured between the electromagnetic fields of the stator and rotor phases as a function of at least the first range of rotational speeds of the polyphase machine,
wherein the method further comprises:
selecting the lead angle as a function of respective ranges of rotational speeds of the polyphase machine;
associating a first lead angle is with a first range of rotational speeds, associating a second lead angle with a second range of rotational speeds, and so on;
selecting and/or changing the lead angle as a function of which range of rotational speeds encompasses the rotational speed of the polyphase machine (106) at a given point in time; and
selecting the commanded torque by matching the rotational speed of the polyphase machine at a given point in time with one of a plurality of entries of one or more tables, wherein each entry includes an indication of a respective one of the ranges of rotational speeds and an associated one of the lead angles.

8. The method of claim 7, further comprising:
monitoring an angular position of the rotor of the polyphase machine (106);
augmenting the angular position with the lead angle; and
producing the commutation control signals as a function thereof to produce motoring torque from the polyphase machine (106).

9. The method of claim 7, wherein further ranges of rotational speeds are established by repeating the determining steps for further fixed lead angles.

## Patentansprüche

1. Vorrichtung, umfassend:
eine Treiberschaltung (104) zum Kommutieren von Wicklungen einer mehrphasigen Maschine (106) als Reaktion auf Kommutationssteuersignale und
eine Steuereinheit (102, 110), die zum Erzeugen der Kommutationssteuersignale konfiguriert ist, so dass elektromagnetische Felder von Statorphasen der mehrphasigen Maschine elektromagnetischen Feldern von Rotorphasen der mehrphasigen Maschine zumindest voreilen, um motorisches Drehmoment zu erzeugen,
wobei die Steuereinheit (110) zum automatischen Verändern (110B) eines Voreilwinkels, gemessen zwischen den elektromagnetischen Feldern des Stators und Rotorphasen als eine Funktion jeweiliger Drehzahlbereiche der mehrphasigen Maschine (106), konfiguriert ist, wobei ein erster Drehzahlbereich eingerichtet wird durch: (i) Ermitteln einer ersten Hüllkurve von Drehmoment gegenüber Drehzahl für die mehrphasige Maschine unter Verwendung eines festen ersten Voreilwinkels, (ii) Ermitteln einer zweiten Hüllkurve von Drehmoment gegenüber Drehzahl für die mehrphasige Maschine unter Verwendung eines festen zweiten Voreilwinkels und (iii) Ermitteln einer Differenz zwischen einer Anfangsdrehzahl (204A) und einer Enddrehzahl, an der sich die erste und die zweite Hüllkurve von Drehmoment gegenüber Drehzahl im Wesentlichen schneiden (204B), um einen ersten Drehzahlbereich festzusetzen,
wobei eine erster Voreilwinkel einem ersten Drehzahlbereich zugeordnet ist, ein zweiter Voreilwinkel einem zweiten Drehzahlbereich zugeordnet ist und so weiter und
die Steuereinheit zum Auswählen und/oder Ändern des Voreilwinkels als eine Funktion dessen, welcher Drehzahlbereich die Drehzahl der mehrphasigen Maschine an einem bestimmten Zeitpunkt umfasst, konfiguriert ist.

2. Vorrichtung nach Anspruch 1, wobei die Steuereinheit (110) zum Überwachen einer Winkellage des Rotors der mehrphasigen Maschine (106), zum Steigern der Winkellage mit dem Voreilwinkel und zum Erzeugen der Kommutationssteuersignale als eine Funktion davon, um mit der mehrphasigen Maschine (106) motorisches Drehmoment zu erzeugen, konfiguriert ist.

3. Vorrichtung nach Anspruch 1, die des Weiteren eine oder mehr Tabellen mit jeweiligen Einträgen aufweist, wobei jeder Eintrag eine Anzeige eines jeweiligen der Drehzahlbereiche und einen zugeordneten der Voreilwinkel beinhaltet, wobei die Steuereinheit (110) zum Auswählen des Voreilwinkels durch Abstimmen der Drehzahl der mehrphasigen Maschine (106) zu einem bestimmten Zeitpunkt mit einem der Einträge der einen oder mehr Tabellen konfiguriert ist.

4. Vorrichtung nach Anspruch 1, wobei die Ermittlung des Voreilwinkels es der mehrphasigen Maschine (106) ermöglicht, als eine Funktion der Drehzahl im Vergleich zu Steuerung mit festem Voreilwinkel der mehrphasigen Maschine (106) höchste Drehmomente bei jeder vorgegebenen Drehzahl zu erzielen.

5. Vorrichtung nach Anspruch 1, wobei die Steuereinheit (110) zum automatischen Vergrößern des Voreilwinkels als eine Funktion zunehmender Drehzahl der mehrphasigen Maschine (106) konfiguriert ist.

6. Vorrichtung nach Anspruch 1, wobei die Steuereinheit (110) des Weiteren, wenn die Drehzahl der mehrphasigen Maschine kleiner als ein vorbestimmter Wert ist, zum Verändern des Voreilwinkels von einer negativen Größe in eine positive Größe als eine Funktion der Zeit konfiguriert ist.

7. Verfahren, umfassend:
Auswählen und/oder Berechnen des Voreilwinkels als eine Funktion jeweiliger Drehzahlbereiche einer mehrphasigen Maschine (106),
wobei ein erster Drehzahlbereich festgesetzt wird durch:
Ermitteln einer ersten Hüllkurve von Drehmoment gegenüber Drehzahl für die mehrphasige Maschine unter Verwendung eines festen ersten Voreilwinkels,
Ermitteln einer zweiten Hüllkurve von Drehmoment gegenüber Drehzahl für die mehrphasige Maschine unter Verwendung eines festen zweiten Voreilwinkels und
Ermitteln einer Differenz zwischen einer Anfangsdrehzahl (204A) und einer Enddrehzahl, an der sich die erste und die zweite Hüllkurve von Drehmoment gegenüber Drehzahl im Wesentlichen schneiden (204B), um einen ersten Drehzahlbereich festzusetzen,
Kommutieren von Wicklungen einer mehrphasigen Maschine als Reaktion auf Kommutationssteuersignale,
Erzeugen der Kommutationssteuersignale, so dass elektromagnetische Felder von Statorphasen der mehrphasigen Maschine elektromagnetischen Feldern von Rotorphasen der mehrphasigen Maschine zumindest voreilen, um motorisches Drehmoment zu erzeugen, und
automatisches Verändern eines Voreilwinkels, gemessen zwischen den elektromagnetischen Feldern des Stators und Rotorphasen als eine Funktion von wenigstens dem ersten Drehzahlbereich der mehrphasigen Maschine,
wobei das Verfahren des Weiteren umfasst:
Auswählen des Voreilwinkels als eine Funktion jeweiliger Drehzahlbereiche der mehrphasigen Maschine,
Zuordnen eines ersten Voreilwinkels zu einem ersten Drehzahlbereich, Zuordnen eines zweiten Voreilwinkels zu einem zweiten Drehzahlbereich und so weiter,
Auswählen und/oder Ändern des Voreilwinkels als eine Funktion dessen, welcher Drehzahlbereich die Drehzahl der mehrphasigen Maschine (106) an einem bestimmten Zeitpunkt umfasst, und
Auswählen des angesteuerten Drehmoments durch Abstimmen der Drehzahl der mehrphasigen Maschine zu einem bestimmten Zeitpunkt mit einem von mehreren Einträgen von einer oder mehr Tabellen, wobei jeder Eintrag eine Anzeige eines jeweiligen der Drehzahlbereiche und einen zugeordneten der Voreilwinkel beinhaltet.

8. Verfahren nach Anspruch 7, das des Weiteren aufweist:
Überwachen einer Winkellage des Rotors der mehrphasigen Maschine (106),
Steigern der Winkellage mit dem Voreilwinkel und
Erzeugen der Kommutationssteuersignale als eine Funktion davon, um mit der mehrphasigen Maschine (106) motorisches Drehmoment zu erzeugen.

9. Verfahren nach Anspruch 7, wobei weitere Drehzahlbereiche durch Wiederholen der Ermittlungsschritte für weitere feste Voreilwinkel festgesetzt werden.

## Revendications

1. Appareillage, comprenant :
un circuit de commande (104) pour commuter les bobinages d'une machine polyphasée (106) en réponse aux signaux de contrôle de la commutation ; et
un contrôleur (102, 110) configuré pour produire les signaux pour le contrôle de la commutation de telle sorte que les champs électromagnétiques des phases du stator de la machine polyphasée guident au moins les champs électromagnétiques des phases du rotor de la machine polyphasée pour produire un couple moteur,
dans lequel le contrôleur (110) est configuré pour faire varier (110B) de manière automatique un angle d'avance mesuré entre les champs électromagnétiques des phases du stator et du rotor en fonction des gammes respectives des vitesses de rotation de la machine polyphasée (106), une première gamme de vitesses de rotation étant établie par : (i) la détermination d'un premier couple en fonction de l'enveloppe des vitesses de la machine polyphasée en utilisant un premier angle d'avance défini ; (ii) la détermination d'un second couple en fonction de l'enveloppe des vitesses de la machine polyphasée en utilisant un second angle d'avance défini ; et (iii) la détermination de la différence entre une vitesse initiale (204 A) et une vitesse finale à laquelle de manière substantielle le premier et le second couples en fonction des enveloppes des vitesses se croisent (204 B) pour établir une première gamme de vitesses de rotation,
dans lequel un premier angle d'avance est associé à une première gamme de vitesses de rotation, un second angle d'avance est associé à une seconde gamme de vitesses de rotation, et ainsi de suite ; et
le contrôleur est configuré pour choisir et/ou changer l'angle d'avance selon que la gamme des vitesses de rotation inclut la vitesse de rotation de la machine polyphasée à un instant donné.

2. Appareillage selon la revendication 1, dans lequel le contrôleur (110) est configuré pour surveiller la position angulaire du rotor de la machine polyphasée (106), augmenter la position angulaire avec l'angle d'avance, et générer les signaux pour le contrôle de la commutation en fonction de ceux-ci afin de créer le couple moteur à partir de la machine polyphasée (106).

3. Appareillage selon la revendication 1, comprenant en outre un ou plusieurs tableaux ayant des entrées respectives, où chaque entrée inclut une indication d'une vitesse respective parmi les gammes des vitesses de rotation et un angle associé parmi les angles d'inclinaison, dans lequel le contrôleur (110) est configuré pour choisir l'angle d'avance en jumelant la vitesse de rotation de la machine polyphasée (106) à un instant donné avec l'une des entrées de l'un ou de plusieurs tableaux.

4. Appareillage selon la revendication 1, dans lequel le détermination de l'angle d'avance permet à la machine polyphasée (106) de réaliser les couples les plus élevés à chaque vitesse de rotation donnée, en fonction de la vitesse de rotation par rapport au contrôle de l'angle d'avance fixe de la machine polyphasée (106).

5. Appareillage selon la revendication 1, dans lequel le contrôleur (110) est configuré pour augmenter de manière automatique l'angle d'avance en fonction de la vitesse de rotation croissante de la machine polyphasée (106).

6. Appareillage selon la revendication 1, dans lequel le contrôleur (110) est configuré en outre pour faire varier l'angle d'avance d'une grandeur négative vers une grandeur positive en fonction du temps lorsque la vitesse de rotation de la machine polyphasée est inférieure à une valeur prédéterminée.

7. Procédé, comprenant :
au moins l'un parmi le choix et le calcul de l'angle d'avance en fonction des gammes respectives des vitesses de rotation d'une machine polyphasée (106) ;
dans lequel une première gamme de vitesses de rotation est établie par :
la détermination d'un premier couple en fonction de l'enveloppe des vitesses de la machine polyphasée en utilisant un premier angle d'avance défini ;
la détermination d'un second couple en fonction de l'enveloppe des vitesses de la machine polyphasée en utilisant un second angle d'avance défini ; et
la détermination de la différence entre la vitesse initiale (204 A) et la vitesse finale à laquelle de manière substantielle le premier et le second couples en fonction des enveloppes des vitesses se croisent (204 B) pour établir une première gamme de vitesses de rotation ;
la commutation des bobinages d'une machine polyphasée en réponse aux signaux pour le contrôle de la commutation ;
la production des signaux pour le contrôle de la commutation de telle sorte que les champs électromagnétiques des phases du stator de la machine polyphasée guident au moins les champs électromagnétiques des phases du rotor de la machine polyphasée pour produire le couple moteur ; et
la variation de manière automatique de l'angle d'avance mesuré entre les champs électromagnétiques des phases du stator et du rotor en fonction d'au moins la première gamme de vitesses de rotation de la machine polyphasée,
dans lequel le procédé comprend en outre :
le choix de l'angle d'avance en fonction des gammes respectives des vitesses de rotation de la machine polyphasée ;
l'association d'un premier angle d'avance avec une première gamme de vitesses de rotation, l'association d'un second angle d'avance avec une seconde gamme de vitesses de rotation, et ainsi de suite ;
le choix et/ou le changement de l'angle d'avance selon que la gamme des vitesses de rotation inclut la vitesse de rotation de la machine polyphasée (106) à un instant donné ; et
le choix du couple commandé en jumelant la vitesse de rotation de la machine polyphasée à un instant donné avec l'une des pluralités des entrées de l'un ou de plusieurs tableaux, dans lequel chaque entrée inclut une indication d'une gamme respective parmi les gammes des vitesses de rotation et un angle d'avance associé parmi les angles d'avance.

8. Procédé selon la revendication 7, comprenant en outre :
la surveillance d'une position angulaire du rotor de la machine polyphasée (106) ;
l'augmentation de la position angulaire avec l'angle d'avance ; et
la génération des signaux pour le contrôle de la commutation en fonction de ceux-ci pour créer le couple moteur à partir de la machine polyphasée (106).

9. Procédé selon la revendication 7, dans lequel en outre les gammes des vitesses de rotation sont établies par la répétition des étapes déterminantes pour d'autres angles d'avance définis.
